# EUROPÄISCHE PATENTSCHRIFT

(11) **EP 3 947 105 B1**
(45) Veröffentlichungstag und Bekanntmachung des Hinweises auf die Patenterteilung: **29.11.2023**
(21) Anmeldenummer: 20720361.3
(22) Anmeldetag: 02.04.2020
(51) Int. Cl.: B62B 3/14

(54) **WARENKORB**
SHOPPING BASKET
PANIER

(30) Priorität: 04.04.2019 DE 102019108911
(43) Veröffentlichungstag der Anmeldung: 09.02.2022
(73) Patentinhaber: Wieth, Franz, 82178 Puchheim (DE); Filosi, Andreas, 82178 Puchheim (DE)
(72) Erfinder: Wieth, Franz, 82178 Puchheim (DE); Filosi, Andreas, 82178 Puchheim (DE)
(74) Vertreter: Braun-Dullaeus Pannen Emmerling Patent- & Rechtsanwaltspartnerschaft mbB
(86) Internationale Anmeldenummer: PCT/EP2020/059461
(87) Internationale Veröffentlichungsnummer: WO 2020/201459

(56) Entgegenhaltungen:
- EP-B1- 0 643 653
- DE-B3-102005 033 031
- DE-U1- 8 632 310
- GB-A- 2 555 594

## Beschreibung

Die Erfindung betrifft einen Warenkorb, insbesondere einen Einkaufswagenkorb, mit einem Trennelement zur Unterteilung des Innenraumes des Warenkorbes, aufweisend einen durch das Trennelement abgeteilten ersten Bereich des Warenkorbes. Des Weiteren betrifft die Erfindung einen Zwischenboden für einen Warenkorb.

Trennelemente werden beispielsweise in Form von Trenngittern in Einkaufswagen eingesetzt. Mit ihnen kann ein dem Griff des Einkaufswagens abgewandter Endbereich eines Einkaufswagenkorbes abgetrennt werden, um darin transportierte Waren vom Rest des Einkaufs separieren zu können. Das Trennelement respektive Trenngitter dient dabei dem Schutz von empfindlicher Ware gegen ein Verrutschen oder Umkippen bzw. das Zusammenstoßen mit anderen in den Einkaufswagenkorb gelegten Gegenständen.

Ein ortsfest in den Warenkorb eingebautes Trennelement wird üblicherweise quer im Einkaufswagenkorb eingesetzt und, im Falle eines Korbes aus Draht, endseitig an Drähten der Längsseiten des Einkaufswagenkorbes befestigt. Als Befestigungsmittel weist das Trenngitter seitlich vorstehende Ösen auf. Zur Befestigung an den Drähten werden die Ösen vollständig um den Draht geschlossen, beispielsweise durch Verschweißen. Auf diese Weise wird sichergestellt, dass das Trenngitter nicht mehr in Längsrichtung des Korbes verschoben werden kann. Bei der Positionierung eines solchen Trenngitters ist zusätzlich zu beachten, dass die Tiefe des verbleibenden Einkaufswagenkorbes ausreicht, um das vollständige Einschieben weiterer Einkaufswagen beim Stapeln der Einkaufswagen in einer Garage oder Abstellfläche zu ermöglichen. Eine Weiterentwicklung eines derartigen Trennelements wird von der DE 10 2017 119 384 gezeigt.

Zudem sind verschwenkbare Trennelemente bekannt. Diese können von einer ersten Position in eine von den Seiten des Warenkorbes abstehenden zweite Position verschwenkt werden. Hierdurch wird ein Kunde in die Lage versetzt, selbst zu entscheiden, ob er das Trennelement in die zweite Position verschwenkt oder nicht. Ein mit einem verschwenkbaren Trennelement ausgerüsteter Warenkorb ermöglicht es somit, seinen Innenraum lediglich bei Bedarf mittels eines Trennelements zu unterteilen. Ein solches Trennelement wird von der DE 10 2018 132 344 offenbart.

Trennelemente vermögen somit einen Warenkorb zu unterteilen, sind aber nicht in der Lage, im Warenkorb eine zusätzliche Ablagefläche zur Verfügung zu stellen.

Die DE 86 32 310 U1 offenbart einen Transportwagen mit einem Trennelement und mit einer verschwenkbaren Klappe zur Schaffung eines individuellen Schließfaches.

Diese Patentanmeldung stellt sich die Aufgabe, ein Trennelement zu nutzen, um für einen Warenkorb bei Bedarf eine weitere Ablagefläche zu generieren.

Diese Aufgabe löst der Warenkorb mit den Merkmalen des Anspruchs 1. Bevorzugte Weiterbildungen sind in den abhängigen Ansprüchen definiert.

Ein wesentlicher Grundgedanke der Erfindung ist es, einen gattungsgemäßen Warenkorb vorzuschlagen, bei dem ein Zwischenboden schwenkbar an dem Draht oder der Strebe befestigt ist, so dass der Zwischenboden von einer ersten Position, in der er außerhalb des ersten Bereichs des Warenkorbes angeordnet ist, in eine zweite Position verschwenkbar ist, in welcher er den ersten Bereich des Warenkorbes überdeckt, wobei der Zwischenboden in der zweiten Position an dem Trennelement anliegt, insbesondere aufliegt.

Ein Vorteil der erfindungsgemäßen Lösung ist es, dass solange der Zwischenboden in seiner ersten Position angeordnet ist, eine den Warenkorb nutzende Person diesen beladen kann, ohne durch den Zwischenboden behindert zu werden. Zudem kann der Zwischenboden in seiner ersten Position so ausgerichtet sein, dass er zumindest im Wesentlichen parallel zu einer Außenwand des Warenkorbes angeordnet ist. Hierdurch wird verhindert, dass die Außenmaße des Warenkorbes durch den Zwischenboden deutlich vergrößert werden. Dies ist insbesondere von Vorteil, wenn der Warenkorb ein Einkaufswagenkorb ist. Ein zumindest größtenteils an der Außenwand anliegender Zwischenboden behindert nicht das Nesten der Einkaufswagen. Außerdem droht keine Gefahr, dass der Zwischenboden durch Kontakt mit einem in der Reihe nächstfolgenden Warenkorb beschädigt werden kann. Bei Einkäufen wird die im Warenkorb verfügbare Ablagefläche von den darauf abgelegten Waren üblicherweise in kurzer Zeit bedeckt sein. Der Kunde ist dann gezwungen, weitere in den Warenkorb eingelegte Waren auf einander zu legen. Dabei besteht immer die Gefahr, dass empfindliche Waren beschädigt werden. Indem der Kunde druckempfindliche Waren in den vom Trennelemente abgetrennten ersten Bereich legt, kann er diese von den anderen Waren abschirmen.

Ein den ersten Bereich für empfindliche Waren nutzender Kunde wird jedoch davon absehen, auf die in den ersten Bereich eingelegten empfindlichen Waren weitere Waren zu legen, die beispielsweise aufgrund ihres Gewichts oder ihrer Oberflächenbeschaffenheit zu einer Beeinträchtigung der darunterliegenden, empfindlichen Waren führen können. Beispielsweise wird er es ablehnen, auf im ersten Bereich liegendes empfindliches Obst oder Gemüse noch ein Getränke-Sixpack zu stellen.

Dies führt dazu, dass der vom Trennelement abgetrennte erste Bereich des Warenkorbes nicht bis oben gefüllt wird, obwohl der Kunde gerne noch weitere Waren einkaufen würde. Für das den Warenkorb nutzende Geschäft folgt hieraus ein Umsatzverlust. Der mit diesem Kunden mögliche Umsatz wurde nicht vollständig verwirklicht.

In einem solchen Fall wird der Kunde durch den erfindungsgemäßen Warenkorb in die Lage versetzt, mit Verschwenken des Zwischenbodens eine zusätzliche Ablagefläche zu generieren. Auf diese Ablagefläche können nun die zusätzlichen Waren abgestellt werden, ohne dass er befürchten muss, die darunterliegenden empfindlichen Waren zu beeinträchtigen.

Von besonderem Vorteil ist es dabei, dass der Zwischenboden in seiner zweiten Position nicht nur an dem Draht oder der Strebe befestigt ist, sondern auch an dem Trennelement anliegt. Hierdurch wird der Zwischenboden zusätzlich stabilisiert. Insbesondere wenn der Zwischenboden in der zweiten Position am Trennelement aufliegt, wirkt dieses als Stütze für den Zwischenboden. Dies ermöglicht es dem Zwischenboden, auch Waren größeren Gewichts sicher zu tragen.

Vorteilhaft ist es dabei, wenn die Länge des Zwischenbodens derart auf den Abstand zwischen der Wand des Warenkorbes, an dem der Zwischenboden schwenkbar befestigt ist, und dem Trennelement angepasst ist, dass er in seiner zweiten Position nicht oder nur unwesentlich an der dem ersten Bereich abgewandten Seite des Trennelements übersteht. Hierdurch wird verhindert, dass ein nach dem Einkauf in der zweiten Position gelassener Zwischenboden beim Nesten von Einkaufswagen durch einen Kontakt mit der Vorderseite des eingeschobenen Einkaufswagens verbogen oder beschädigt werden kann.

Vorteilhafterweise ist der Draht oder die Strebe, an dem oder der der Zwischenboden befestigt ist, kein zusätzlich am Einkaufswagen angebrachtes Bauteil, sondern bildet die Oberkante des Warenkorbes aus. Wesentlich ist es, dass oberhalb des Drahts oder der Strebe kein Teil des Warenkorbes angeordnet ist, welches einem Verschwenken des Zwischenbodens im Wege steht. Das Verschwenken ermöglicht vorzugsweise ein erstes Gelenk, welches zwischen dem Draht oder der Strebe und dem Zwischenboden angeordnet ist. Von besonderem Vorteil ist es, wenn der Zwischenboden über mehrere, auf der selben Drehachse angeordnete erste Gelenke respektive Scharniere mit dem Draht oder der Strebe verbunden ist. Dies mindert die Belastung des Gelenks, da ein Verkanten des Zwischenbodens beim Verschwenken nicht mehr möglich ist.

Insbesondere macht sich diese Erfindung die Merkmale der eingangs genannten Patentanmeldungen DE 10 2017 119 384 und DE 10 2018 132 344 zu eigen, welche einem erfindungsgemäßen Zusammenwirken mit dem Zwischenboden nicht entgegenstehen.

In einer besonders bevorzugten Ausführungsform weist der Zwischenboden einen ersten und einen zweiten Abschnitt auf, die über ein zweites Gelenk, insbesondere eine Mehrzahl zweiter Gelenke, verbunden sind. Verläuft die Drehachse des Gelenks zumindest annähernd parallel zu der durch den Draht oder die Strebe gebildeten Drehachse, kann der dem Draht oder der Strebe benachbarte erste Abschnitt in der zweiten Position des Zwischenbodens an der Wand des Warenkorbes anliegen. Die durch die Ausrichtung des ersten Abschnitts zumindest im Wesentlichen parallel zur Wand mögliche Anlage des ersten Abschnitts an der Innenwand des Warenkorbes entlastet das erste Gelenk von quer zur Wand wirkendem Druck.

Ein weiterer Vorteil dieser Ausführungsform ist es, dass der erste Abschnitt des Zwischenbodens beim Verschwenken in die zweite Position bereits durch das Eigengewicht des Zwischenbodens, spätestens aber nach Belastung des Zwischenbodens durch das Auflegen einer Ware in die an der Wand des Warenkorbes anliegende Position bewegt wird. Der den Warenkorb nutzende Kunde muss somit außer dem Verschwenken des Zwischenbodens in die zweite Position keine weiteren Anpassungen vornehmen, um den ersten Abschnitt in die gewünschte Position zu bringen.

Ein besonderer Vorteil dieser Ausführungsform ist, dass der erste Abschnitt auf diese Weise eine Barriere respektive eine seitliche Begrenzung für die auf den Zwischenboden abgestellten Waren bildet, die ein Herunterrutschen dieser Waren vom Zwischenboden verhindert.

Von Vorteil ist es auch, wenn die Breite des Zwischenbodens an die Breite des Warenkorbes angepasst ist, sodass ein Spalt zwischen den Seitenwänden des Warenkorbes, welche zwischen dem ersten Gelenk und dem Trennelement angeordnet sind, und dem Zwischenboden möglichst gering ist. Dann können die Seitenwände ebenfalls als Barriere genutzt werden, die ein Herunterrutschen der Waren vom Zwischenboden verhindern.

In einer bevorzugten Ausführungsform ist der Abstand zwischen der Strebe oder dem Draht, an dem der Zwischenboden befestigt ist, und dem zweiten Gelenk zumindest gleich groß wie die Höhendifferenz zwischen einer Oberkante des Trennelements und der Strebe oder dem Draht. Ist dieser Abstand gleich groß, ist der zweite Abschnitt des Zwischenbodens in der zweiten Position zumindest annähernd waagerecht ausgerichtet. Ist er größer, fällt der zweite Abschnitt in Richtung erster Abschnitt ab. Dies führt dazu, dass auf dem zweiten Abschnitt des Zwischenbodens abgesetzte Waren bei auf den Warenkorb einwirkenden Stößen eher in Richtung des die Barriere bildenden ersten Abschnitts rutschen. Auf diese Weise wird ein Herabfallen der auf den Zwischenboden abgesetzten Waren erschwert.

Grundsätzlich ist es bei jeder Ausführungsform natürlich möglich, an dem dem ersten Gelenk entgegengesetzten Ende des Zwischenbodens eine Barriere auszubilden, welche einen Anschlag für in diese Richtung rutschende, auf dem Zwischenboden abgelegte Waren bereitstellt.

Von Vorteil ist es auch, wenn eine Oberkante des Trennelements formschlüssig mit dem in der zweiten Position am Trennelement anliegenden oder aufliegenden Zwischenboden verbunden ist. Die formschlüssige Verbindung kann beispielsweise als Nut-Feder-Verbindung bzw. in Form einer Hinterschneidung ausgebildet sein. Sie verhindert einen Kontaktverlust zwischen Trennelement und Zwischenboden und damit den Verlust der Stützwirkung. Der Zwischenboden darf sich bei einer Gewichtsbelastung zwar immer noch biegen, kann aber nicht vom Trennelement rutschen. Dies ermöglicht eine Materialersparnis, da der Zwischenboden weniger steif ausgebildet werden muss.

Erfindungsgemäß wird der außen am Warenkorb herunterhängende Zwischenboden entweder magnetisch, und/oder über einen Formschluss an der Stirnseite des Warenkorbes in einer festen Position gehalten.

Außerdem kann der vorne am Warenkorb herunterhängende Zwischenboden auch als Stoßschutz ausgeprägt sein. Er kann damit aus Kunststoff gefertigte Stoßschutzecken und Kanten ersetzen, die üblicherweise als Zusatzteil an dem Warenkorb befestigt sind.

Vorteilhafterweise ist an der dem ersten Bereich des Warenkorbes abgewandten Seite des Trennelements ein an dem Trennelement oder der Seitenwand des Warenkorbes federnd gelagertes Tragprofil angeordnet, welches von einer an der Seitenwand des Warenkorbes oder dem Trennelement um weniger als 90 Grad, insbesondere um weniger als 50 Grad abstehenden Position in eine an dem Trennelement oder der Seitenwand anliegenden Position gegen die Federkraft verstellbar ist. Ein derartiges Tragprofil ist in der Lage, einen an der dem ersten Bereich abgewandten Seite des Trennelements überstehenden Zwischenboden zusätzlich zu stützen. Aufgrund seiner federnden Lagerung behindert es aber nicht das zusammenschieben von Einkaufswagen.

In einer nicht erfindungsgemäßen alternativen Ausführungsform ist der Zwischenboden nicht an dem Draht oder der Strebe befestigt. Vielmehr ist er an dem Trennelement befestigt, so dass der Zwischenboden von einer ersten Position, in der er an oder in dem Trennelement angeordnet ist, in eine zweite Position verschwenkbar ist, in welcher er den ersten Bereich des Warenkorbes überdeckt, wobei der Zwischenboden in der zweiten Position an einer Innenwand des Warenkorbes, insbesondere an der von dem Einkaufswagengriff entfernten Innenwand eines Einkaufwagenkorbes, anliegt.

Bei dieser nicht erfindungsgemäßen alternativen Ausführungsform sind somit die Orte der Befestigung und des Anliegebereichs des Zwischenbodens umgekehrt ausgebildet. Dies hat den Vorteil, dass der Zwischenboden in seiner ersten Position nicht an der Außenseite des Warenkorbes angeordnet ist. Eine Beschädigung des Zwischenbodens durch einen Anstoß oder eine Karambolage des Warenkorbes in dem Außenbereich des Korbes, in welchem der Zwischenboden in seiner ersten Position ansonsten angeordnet wäre, wird auf diese Weise vermieden. Der in dieser

Ausführungsform angeordnete Zwischenboden ist in seiner ersten Position innerhalb des Warenkorbes und somit geschützt positioniert.

Von Vorteil ist es dabei, wenn das Anliegen an der Innenwand des Warenkorbes von oben erfolgt. Diese Auflage des Zwischenbodens ermöglicht im Vergleich zu einem Halten des von unten herangeführten Zwischenbodens, dass der Zwischenboden ein höheres Gewicht tragen kann, ohne nach unten wegzuklappen.

Von besonderem Vorteil ist es, wenn der Zwischenboden an einer an der Innenwand des Warenkorbes für ihn ausgebildeten Auflage zur Anlage kommt. Eine solche Auflage ist einfach an dem Warenkorb zu befestigen. Die Ausformung der Auflage kann besonders gut an die Form des Zwischenbodens angepasst werden. Dies ermöglicht es auch, auf besonders einfache Weise für einen besseren Halt des Zwischenbodens die Auflage für einen Formschluss, wie beispielsweise eine Hinterschneidung, auszubilden. Zusätzlich ist es vorsehbar, dass die Auflage die Wand des Warenkorbes durchgreift und an der Außenseite des Warenkorbes vorsteht, so dass sie als Stoßschutz für den Warenkorb wirkt.

Von besonderem Vorteil ist es, wenn der Zwischenboden in einem Zwischenschritt der Bewegung von seiner ersten in seine zweite Position relativ zum Warenkorb gesehen nach oben, also in Richtung der Warenkorböffnung, bewegt wird. Dies ermöglicht es, dass der Zwischenboden nicht innerhalb des zweiten Bereichs des Warenkorbes verschwenkt werden muss. So wird vermieden, dass der Zwischenboden durch dort eingelegte Waren blockiert wird oder diese durch die Schwenkbewegung beschädigt werden. Das Bewegen des Zwischenbodens in eine obere Position erlaubt es zudem, das erste Gelenk dem Ende des Zwischenbodens zuzuordnen, welcher sowohl in der ersten Position wie auch in der oberen Position unten, also näher am Boden des Warenkorbes angeordnet ist. Der Zwischenboden muss also in seiner oberen Position nur noch in Richtung des ersten Bereichs des Warenkorbes verschwenkt werden, um diesen zu überdecken. Der Rotationswinkel des Zwischenbodens um die Verschwenkungsachse ist deutlich geringer, da eine Verschwenkung des Zwischenbodens aus einer ersten Position durch den zweiten Bereich des Warenkorbes nicht mehr erforderlich ist.

Das Bewegen der alternativen Ausführungsform des Zwischenbodens in die obere Position erfolgt am besten entlang einer Führung oder einer Kulisse, mittels welcher der Zwischenboden nach oben geführt wird, bis er eine Position erreicht, aus der er zum Erreichen der zweiten Position in Richtung des ersten Bereichs des Warenkorbes verschwenkt werden kann. Die Führung oder Kulisse kann derart ausgebildet oder angeordnet sein, dass erst in der oberen Position ein Verschwenken des Zwischenbodens möglich ist.

Besonders vorteilhaft ist es dabei, wenn die Schwenkbewegung mittels eines Zylinderlagers ausgeführt wird. Dies ermöglicht es, dass Trennelement mit einer Führung oder Kulisse für den Zylinder auszubilden. Der besondere Vorteil besteht darin, dass mittels der Führung oder der Kulisse dem Nutzer des Zwischenbodens bei der Bewegung des Zwischenbodens nach oben eine Endposition, insbesondere die obere Position, vorgebbar ist, mit deren Erreichen der Zwischenboden in die zweite Position verschwenkt werden kann. Dies erleichtert dem Nutzer die Bedienung des Zwischenbodens.

Vorteilhafterweise weist die Innenwand des Warenkorbes eine Auflage auf, an welcher der Zwischenboden bei Erreichen seiner zweiten Position zur Anlage kommt. In einer hierzu alternativen Ausführungsform greifen an der Oberkante des Zwischenbodens angeordnete Zähne beim Erreichen der zweiten Position in Maschen des Warenkorbes ein, wobei der jeweilige Zahn an einer der dort ausgebildeten Streben oder Drähte zur Anlage kommt. Für beide Ausführungsformen gilt, dass die Anlage im Form einer Nut-Feder-Verbindung erfolgen kann bzw. als Hinterschneidung ausgebildet ist. Wie bereits zuvor erläutert, ermöglicht die Ausbildung dieser Merkmale eine Materialersparnis, da der Zwischenboden weniger steif ausgebildet werden muss.

Des Weiteren kann die nicht erfindungsgemäße alternative Ausführungsform des am Trennelement befestigten Zwischenbodens ausdrücklich auch alle anderen, von der entgegengesetzten Befestigung unabhängigen Merkmale und Vorteile aufweisen, welche bereits zu der eingangs beschriebenen Ausführungsform, bei welcher der Zwischenboden schwenkbar an dem Draht oder der Strebe des Warenkorbes befestigt ist, erläutert wurden. Nur als Beispiel wird hier die Ausbildung eines zweiten Gelenks, das es einem ersten, an dem Trennelement angrenzenden Abschnitt des Zwischenbodens ermöglicht, in eine an dem Trennelement anliegende Position verschwenkt zu werden und die sich hieraus für den Zwischenboden ergebenden Vorteile, sowie die hiermit im Zusammenhang stehende weiteren Merkmale und deren Vorteile genannt.

Von besonderem Vorteil ist es, wenn der Zwischenboden in seiner ersten Position als Einschubelement in dem Trennelement gehalten wird. Auf diese Weise wird der Zwischenboden bei Nichtbenutzung auch vor Beschädigungen durch in den Warenkorb eingelegte Gegenstände geschützt. Die in der DE 10 2017 119 384 und der DE 10 2018 132 344 gezeigten Trennelemente sind hierfür besonders geeignet, da sie bereits eine Einschuböffnung aufweisen, in die der Zwischenboden eingesetzt werden kann. Zudem ermöglicht die Positionierung des Zwischenbodens innerhalb des Trennelements, die Aufnahme als Führung oder Kulisse auszubilden, mit der die Verschwenkung des Zwischenbodens und/oder die Bewegung des Zwischenbodens aus seiner ersten Position heraus bzw. wieder hinein vorgegeben wird. In einer besonders bevorzugten Ausführungsform ist der Zwischenboden aus Kunststoff gefertigt. Dies ermöglicht es, den Zwischenboden kostengünstig im Spritzgussverfahren herzustellen. Zudem ermöglicht es eine sehr variable Ausformung des Zwischenbodens. Beispielsweise kann er derart ausgebildet werden, dass er ein Element zur Darstellung von Informationen, insbesondere von Werbung, aufweist.

## Patentansprüche

1. Warenkorb, insbesondere Einkaufswagenkorb, mit einem Trennelement zur Unterteilung des Innenraumes des Warenkorbes, aufweisend einen durch das Trennelement abgeteilten ersten Bereich des Warenkorbes und wobei an der Oberseite des Warenkorbes ein Draht oder eine Strebe angeordnet ist,
wobei ein Zwischenboden schwenkbar an dem Draht oder der Strebe befestigt ist, so dass der Zwischenboden von einer ersten Position, in der er außerhalb des ersten Bereichs des Warenkorbes angeordnet ist, in eine zweite Position verschwenkbar ist, in welcher er den ersten Bereich des Warenkorbes überdeckt, wobei der Zwischenboden in der zweiten Position an dem Trennelement anliegt, insbesondere aufliegt, H **dadurch gekennzeichnet**, H
dass der außen am Warenkorb herunterhängende Zwischenboden magnetisch und/oder über einen Formschluss an einer Stirnseite des Warenkorbes in einer festen Position gehalten wird.

2. Warenkorb nach Anspruch 1,
**dadurch gekennzeichnet,**
**dass** der Zwischenboden einen ersten und einen zweiten Abschnitt aufweist, die über ein zweites Gelenk verbunden sind, wodurch der erste Abschnitt in der zweiten Position zumindest annähernd parallel zu einer Seitenwand des Warenkorbes ausgerichtet ist, an dessen Oberseite der Draht oder die Strebe angeordnet ist.

3. Warenkorb nach Anspruch 2,
**dadurch gekennzeichnet,**
**dass** der Abstand zwischen der Strebe oder dem Draht, an dem der Zwischenboden befestigt ist, und dem zweiten Gelenk zumindest gleich groß ist wie die Höhendifferenz zwischen einer Oberkante des Trennelements und der Strebe oder dem Draht.

4. Warenkorb nach einem der Ansprüche 1-3,
**dadurch gekennzeichnet,**
**dass** eine Oberkante des Trennelements formschlüssig mit dem in der zweiten Position am Trennelement anliegenden Zwischenboden verbunden ist.

5. Warenkorb nach einem der vorangegangenen Ansprüche,
**dadurch gekennzeichnet,**
**dass** der Zwischenboden ein Element zur Darstellung von Information, insbesondere von Werbung, aufweist.

6. Warenkorb nach einem der vorangegangenen Ansprüche,
**dadurch gekennzeichnet,**
**dass** an der dem ersten Bereich des Warenkorbes abgewandten Seite des Trennelements ein an dem Trennelement oder der Seitenwand des Warenkorbes federnd gelagertes Tragprofil angeordnet ist, welches von einer an der Seitenwand des Warenkorbes oder dem Trennelement um weniger als 90 Grad, insbesondere um weniger als 50 Grad abstehenden Position in eine von dem Trennelement oder der Seitenwand anliegenden Position gegen die Federkraft verstellbar ist.

## Claims

1. A shopping basket, more particularly shopping trolley basket, with a separating element for separating the interior space of the shopping basket, comprising a first area of the shopping basket separated by the separating element, and
wherein in the upper side of the shopping basket a wire or a strut is arranged,
wherein an intermediate base is pivotally fastened to the wire or strut, so that the intermediate base can be swung from a first position in which it is outside the first area of the shopping trolley basket, into a second position in which it covers the first area of the shopping trolley basket, wherein in the second position the intermediate base is in contact with the separating element, more particular rests thereon,
**characterised in that**
the intermediate base hanging down on the outside of the shopping trolley basket is held magnetically and/or by way of positive locking in a fixed position on an end face of the shopping trolley basket.

2. The shopping trolley basket according to claim 1,
**characterised in that**
the intermediate base comprises a first and a second section, which are connected to each other via a second joint, through which in the second position, the first section is aligned at least approximately in parallel to a side wall of the shopping trolley basket, on the upper side of which the wire or the strut is arranged.

3. The shopping trolley basket according to claim 2,
**characterised in that**
the distance between the strut or the wire on which the intermediate base is fastened, and the second joint, is at least equally as large as the difference in height between a first upper edge of the separating element and the strut or the wire.

4. The shopping trolley basket according to any one of claims 1 - 3,
**characterised in that**
the upper edge of the separating element is connected in a positive manner to the intermediate base which in the second position is in contact with the separating element.

5. The shopping trolley basket according to any one of the preceding claims,
**characterised in that**
the intermediate base comprises an element for displaying information, more particularly advertising.

6. The shopping trolley basket according to any one of the preceding claims,
**characterised in that**
arranged on the side of the separating element facing away from the first area of the shopping trolley basket is a support profile, spring-held on the separating wall or the side wall of the shopping trolley basket, which is adjustable against the force of a spring from a position projecting on the side wall of the shopping trolley basket or the separating element by less than 90 degrees, more particularly by less than 50 degrees, into a position adjoining the separating element or the side wall.

## Revendications

1. Panier, notamment panier pour chariot de supermarché, pourvu d'un élément de séparation, destiné à diviser l'espace intérieur du panier, comportant une première zone du panier, séparée par l'élément de séparation et
sur la face supérieure du panier étant placé(e) un fil métallique ou une entretoise,
un fond intermédiaire étant fixé de manière à pouvoir pivoter sur le fil métallique ou sur l'entretoise, de telle sorte que le fond intermédiaire soit susceptible d'être pivoté d'une première position, dans laquelle il est placé à l'extérieur de la première zone du panier dans une deuxième position, dans laquelle il recouvre la première zone du panier, dans la deuxième position, le fond intermédiaire étant adjacent à l'élément de séparation, reposant notamment sur celui-ci,
**caractérisé en ce que** le fond intermédiaire retombant vers le bas sur l'extérieur du panier est maintenu dans une position fixe, de façon magnétique et / ou par l'intermédiaire d'une complémentarité de forme sur une face frontale du panier.

2. Panier selon la revendication 1,
**caractérisé en ce que**
le fond intermédiaire comporte une première et une deuxième sections, qui sont assemblées par l'intermédiaire d'une deuxième articulation, suite à quoi, dans la deuxième position, la première section est orientée au moins approximativement à la parallèle d'une paroi latérale du panier, sur la face supérieure de laquelle est placé (e) le fil métallique ou l'entretoise.

3. Panier selon la revendication 2,
**caractérisé en ce que**
l'écart entre l'entretoise ou le fil métallique sur laquelle (lequel) est fixé le fond intermédiaire et la deuxième articulation est au moins de dimension égale à la différence de hauteur entre l'arête supérieure de l'élément de séparation et l'entretoise ou le fil métallique.

4. Panier selon l'une quelconque des revendications 1 à 3,
**caractérisé**
**en ce qu'**une arête supérieure de l'élément de séparation est assemblée par complémentarité de forme avec le fond intermédiaire adjacent à l'élément de séparation dans la deuxième position.

5. Panier selon l'une quelconque des revendications précédentes,
**caractérisé en ce que**
le fond intermédiaire comporte un élément destiné à représenter une information, notamment une publicité.

6. Panier selon l'une quelconque des revendications précédentes,
**caractérisé en ce que**
sur la face de l'élément de séparation qui est opposée à la première zone du panier est placé un profilé de support logé de manière élastique sur l'élément de séparation ou sur la paroi latérale du panier, lequel est ajustable à l'encontre d'une force de ressort, d'une position débordant de moins de 90 degrés, notamment de moins de 50 degrés sur la paroi latérale du panier ou sur l'élément de séparation dans une position adjacente à l'élément de séparation ou à la paroi latérale.
